# FASCICULE DE BREVET EUROPEEN

(11) **EP 0 961 986 B1**
(45) Date de publication et mention de la délivrance du brevet: **08.10.2003**
(21) Numéro de dépôt: 98963638.6
(22) Date de dépôt: 28.12.1998
(51) Int. Cl.: G06K 7/00

(54) **DISPOSITIF LECTEUR DE CARTE, NOTAMMENT DE CARTE A PUCE**
KARTENLESEVORRICHTUNG, INS BESONDERE FÜR IC KARTEN
CARD, IN PARTICULAR CHIP CARD, READING DEVICE

(30) Priorité: 30.12.1997 FR 9716697
(43) Date de publication de la demande: 08.12.1999
(73) Titulaire: CP8 Technologies, 78431 Louveciennes (FR)
(72) Inventeur: CHOISET, Bruno, F-78640 Villiers Saint Frederic (FR)
(74) Mandataire: Corlu, Bernard
(86) Numéro de dépôt international: FR9802888
(87) Numéro de publication internationale: WO99035605

(56) Documents cités:
- EP-A- 0 793 203
- US-A- 4 259 568

## Description

La présente invention concerne un dispositif lecteur de carte, notamment un lecteur de carte à puce.

Dans le cadre de l'invention, le terme "carte" doit être compris dans son sens le plus général : carte à piste magnétique, carte à mémoire ("CAM"), carte à "puce", etc. Il doit être aussi entendu que le terme "lecteur de carte" est générique : il concerne tout appareil pouvant lire et/ou écrire des/ou sur des cartes des types précités.

De même, les applications de ces cartes sont très diverses : applications bancaires ou similaires, porte-monnaie électronique, badge de sécurité, etc. En France, il est notamment prévu de doter à court ou moyen terme tous les assujettis à la sécurité sociale d'une carte à "puce" stockant un certain nombre de renseignements d'ordre médical et/ou administratif.

Depuis une vingtaine d'années environ, ces divers types de cartes, et notamment les cartes munies d'une "puce électronique", c'est-à-dire d'un contrôleur ou d'un microprocesseur, associé à des circuits de mémoire, se sont généralisées et prennent une place de plus en plus importante dans la vie quotidienne des individus.

Des normes internationales régissent les différents paramètres associés aux cartes : dimensions, emplacement des pistes magnétiques, de la "puce" et des interfaces d'entrée-sortie (connexions). Enfin, la puissance de calcul des circuits électroniques, ainsi que la quantité d'informations stockées ont fortement augmenté.

Les connexions d'entrée-sortie permettent des transmissions bidirectionnelles entre la carte et différents types de lecteur de cartes, que ce soit des lecteurs de cartes associés à des appareils fixes (distributeurs de billets de banque ou DAB, guichets bancaires automatiques ou GAB, dispositifs incorporés dans une caisse enregistreuse ou dans un micro-ordinateur, etc.) ou portables, tels un terminal de paiement (restaurant, magasins divers) ou de santé.

Tous ces appareils ont au moins une caractéristique en commun, à savoir une fente ou fenêtre d'introduction dans laquelle est insérée la carte en vue d'une opération d'écriture et/ou de lecture. Or cette fente donne directement sur le milieu extérieur et elle est suffisamment large pour laisser pénétrer, à l'intérieur du boîtier du lecteur de carte, de petits objets métalliques tels des trombones, ou tout simplement des particules ou de la poussière. L'introduction de tels éléments est d'autant facilitée, et par là plus fréquente, que le lecteur de carte est un terminal portable, susceptible d'être déplacé en des endroits divers, *a priori,* non protégés.

Or un lecteur de carte comporte des circuits électroniques et des organes mécaniques très miniaturisés. Les objets ou les particules polluantes sont donc susceptibles de créer des dysfonctionnements, voire d'endommager certains de ces organes ou circuits.

Les appareils du type précité, notamment les appareils portatifs, ou pour le moins portables, présentent d'autres inconvénients.

En premier lieu, l'ergonomie générale de ces appareils n'est pas optimisée. En particulier les lecteur de carte du type susceptible d'être mis dans la poche d'un vêtement doivent être le plus mince possible et se présentent sensiblement sous la forme d'un parallélépipède rectangle. Lorsqu'ils sont posés sur une table, il est relativement difficile d'introduire la carte dans la fente et l'accès aux touches du clavier n'est pas non plus optimisé.

En, deuxième lieu, il arrive relativement fréquemment que l'utilisateur oublie de reprendre sa carte après usage, notamment après qu'il ait entré son code confidentiel à l'aide du clavier. La carte peut rester à l'intérieur du lecteur de carte sans que le propriétaire de celui-ci s'en aperçoive, notamment si le lecteur de carte est muni d'un couvercle.

L'invention se fixe pour but un dispositif lecteur de carte, notamment de carte à puce, palliant les défauts des dispositifs de l'art connu, dont certains viennent d'être rappelés.

Pour ce faire, le lecteur de carte selon l'invention est conforme aux caractéristiques de la revendication 1. Le recouvrement de la fenêtre d'introduction interdit l'introduction d'éléments non désirés à l'intérieur de l'appareil, même si l'appareil est déplacé dans un milieu pollué. Par ailleurs, la présentation inclinée facilite la manipulation et, notamment, la saisie d'un code confidentiel.

Dans une variante de réalisation préférée, on prévoit des dispositions pour que le rabat ne puisse être en position fermée tant que la carte est présente dans l'appareil, ce qui interdit de fermer l'appareil sans retirer la carte.

L'invention a donc pour objet un dispositif lecteur de carte, notamment de carte à puce, comprenant un boîtier muni de moyens de saisie et d'affichage de données, d'une fente d'introduction de ladite carte à l'intérieur du boîtier et d'un capot permettant la protection de ces moyens de saisie et d'affichage de données, dans une position dite fermée, caractérisé en ce qu'il comprend un rabat solidaire dudit capot et agencé pour qu'il recouvre ladite fente d'introduction lorsque le capot est dans ladite position fermée.

L'invention sera mieux comprise et d'autres caractéristiques et avantages apparaîtront à la lecture de la description qui suit en référence aux figures annexées, parmi lesquelles :
- la figure 1 représente, en vue de dessus, un exemple de réalisation d'un lecteur de carte selon l'invention, en position fermée ;
- la figure 2 représente, en perspective et en vue de trois quarts dessus, ce même lecteur de carte en position semi-ouverte ;
- la figure 3 montre une vue arrière du lecteur de carte, en position ouverte, ainsi qu'une carte à puce en cours d'insertion ;
- la figure 4 montre une vue arrière du lecteur de carte de la figure 1, en position fermée ;
- la figure 5 est une vue de côté du lecteur de carte, en position ouverte, posé sur une surface plane ;
- les figures 6 et 7 illustre, en perpective et vue de l'arrière, une variante de réalisation du lecteur de carte selon l'invention ;
- et la figure 8 est une vue illustrant un détail de fonctionnement du lecteur de carte selon l'invention.

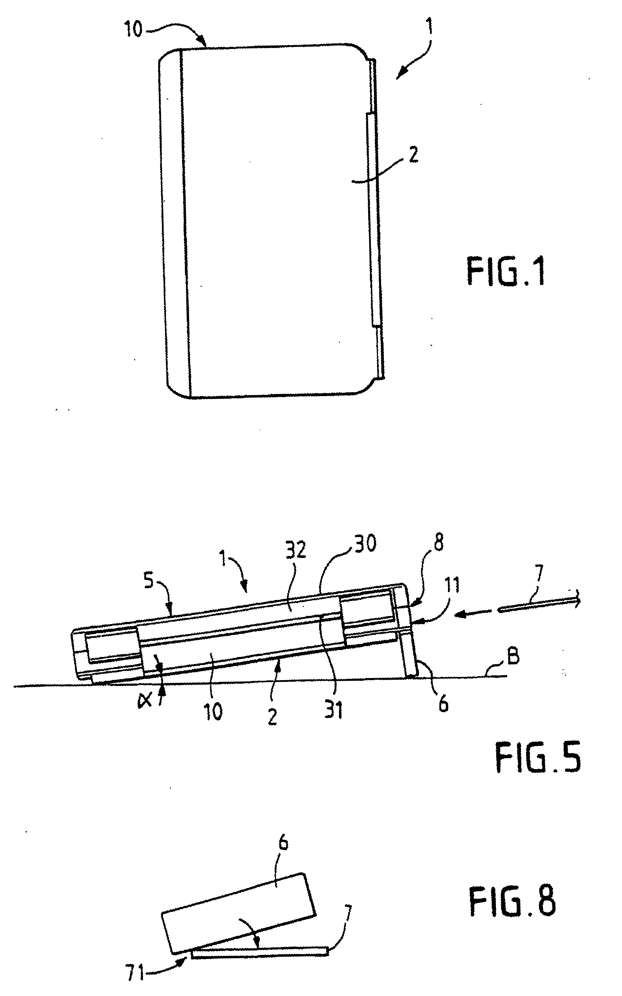

Un exemple de réalisation d'un lecteur de carte selon l'invention va maintenant être décrit en regard des figures 1 à 5.

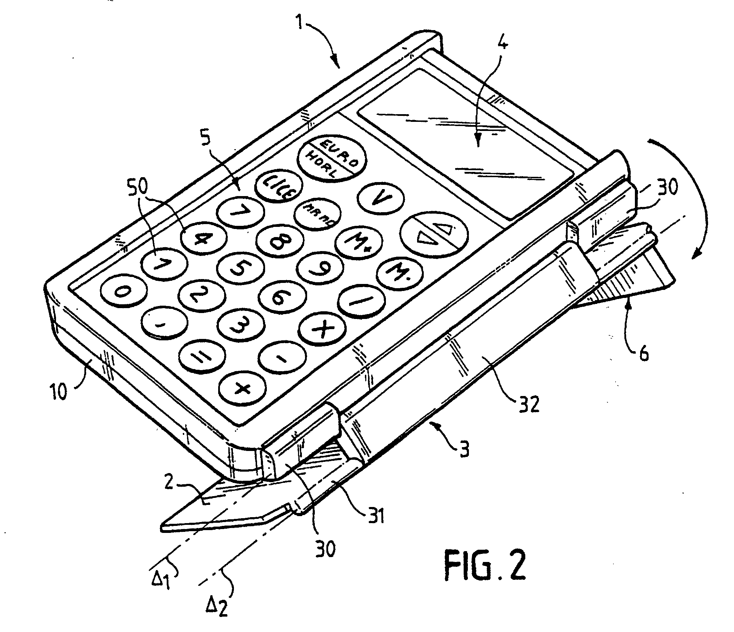

La figure 1 illustre le lecteur de carte 1 en position fermée (vue de dessus) et la figure 2 (vue en perspective de trois quarts dessus), ce même lecteur de carte en position que l'on appellera semi-ouverte. En effet, le boîtier 10 du lecteur de carte est muni d'un couvercle ou capot de protection 2. Ce dernier est attaché au boîtier 10 à l'aide d'une articulation à charnière 3 disposée le long d'une des parois de ce boîtier 10. De façon plus précise, cette articulation comprend une double charnière, 30 et 31, dont le fonctionnement et le rôle seront détaillés ci-après.

Un lecteur de carte comprend habituellement un organe d'affichage 4, le plus souvent à cristaux liquides et un organe de saisie de données constitué par un clavier 5 à touches 50 (touches alphanumériques et touches de fonctions). Le capot de protection 2, dans l'exemple décrit, recouvre entièrement le clavier 5 et l'afficheur 4, lorsqu'il est en position fermée.

Comme il a été indiqué, l'articulation 3 comporte, deux charnières : une première charnière 30, couplant mécaniquement le boîtier 10 sur une première arête d'une pièce intermédiaire 32, et une seconde charnière 31, couplant mécaniquement une seconde arête de cette pièce intermédiaire 32 au capot de protection 2.

La pièce intermédiaire 32 a la forme d'un parallélépipède rectangle, dont la largeur est égale à la demi-largeur de la paroi (droite sur la figure 2) du boîtier 10 à laquelle elle est attachée via la charnière 30. La charnière 30 est attachée au boîtier 10 suivant un axe Δ₁, parallèle à l'arête de côté du boîtier 10, et situé à mi-hauteur de la paroi d'attachement.

Ces dispositions permettent, d'une part, une rotation de la pièce intermédiaire 32 autour de l'axe Δ₁, et, d'autre part, une rotation du capot de protection 2 autour d'un second axe Δ₂ parallèle au premier. Il s'ensuit que le capot de protection 2 peut être rabattu sous le boîtier 10 du lecteur de carte 1, en position entièrement ouverte. Un verrou (non représenté) maintient le capot 2 dans la position fermée (figure 1).

Pour fixer les idées, le capot 2 peut être réalisé en matériau plastique rigide. La bande intermédiaire 32 est avantageusement en matériau rigide, par exemple également en matériau plastique.

Selon une première variante de réalisation (non illustrée), le capot 2 est couplé mécaniquement au boîtier 10 par un organe articulé consistant en une bande de matériau plastique comportant des zones de fragilisation (rainures par exemple) qui permettent de la plier dans ces zones. Cette bande joue donc le rôle de la double charnière 3 précédemment décrite et permet au capot 2 de se replier et de se rabattre en dessous du boîtier 10, comme précédemment.

Selon une deuxième variante de réalisation (non illustrée), la double chamière 3 est remplacée par un organe articulé consistant en une simple bande en matériau souple. De ce fait, cette bande joue également le rôle de la double chamière 3 précédemment décrite et permet au capot 2 de se replier et de se rabattre en dessous du boîtier 10, comme précédemment.

Selon une première caractéristique importante de l'invention, le lecteur de carte 1 est muni d'un cache mobile ou rabat 6, de configuration plane. Sur la figure 2, on aperçoit la forme du rabat 6. Le capot 2 est également sensiblement plan. Les plans formés par le capot 2 et le rabat 6 sont sensiblement perpendiculaires entre eux.

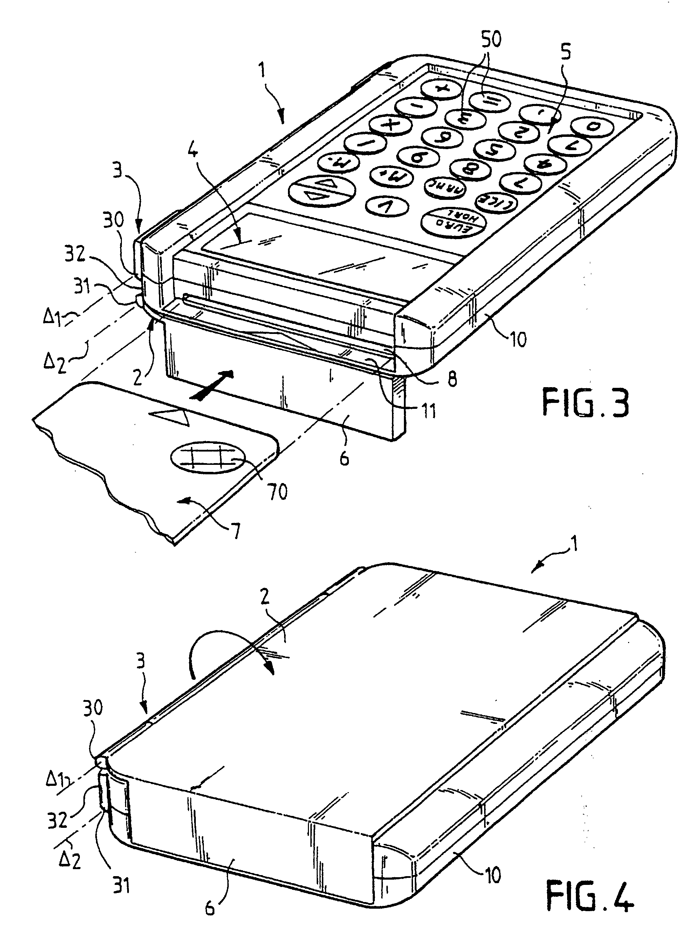

La figure 3 représente (vue en perspective arrière) le lecteur de carte 1, en position entièrement ouverte. On a également représenté, sur cette figure 3, une carte 7 comportant une puce 70, d'un modèle classique en soi, pouvant être utilisée dans le cadre de l'invention. On aperçoit également sur cette figure 3 une fenêtre ou fente d'insertion 8 de la carte 7 à l'intérieur du boîtier 10, en vue d'être lue et/ou écrite. Pour faciliter l'insertion précitée, le boîtier 10 peut être prolongé sur l'arrière par un plateau inférieur 11, servant de guide lors de cette opération d'insertion et soutenant la carte 7 une fois insérée.

La figure 4 illustre le lecteur de carte en vue arrière, mais le capot de protection 2 étant entièrement fermé. Dans cette position, il recouvre et protège le clavier 5 et l'organe de visualisation 4. On remarque également que, selon une caractéristique importante de l'invention, le rabat 6 recouvre entièrement la fente 8 et empêche, de ce fait, toute introduction d'objet et de particules diverses.

A priori, le rabat 6 est en matériau rigide tel qu'une matière plastique, mais peut être également réalisé en matériau souple tel du caoutchouc qui s'adapte à la forme exacte de la paroi comportant la fente d'insertion 8.

On va maintenant détailler d'autres caractéristiques avantageuses de l'invention.

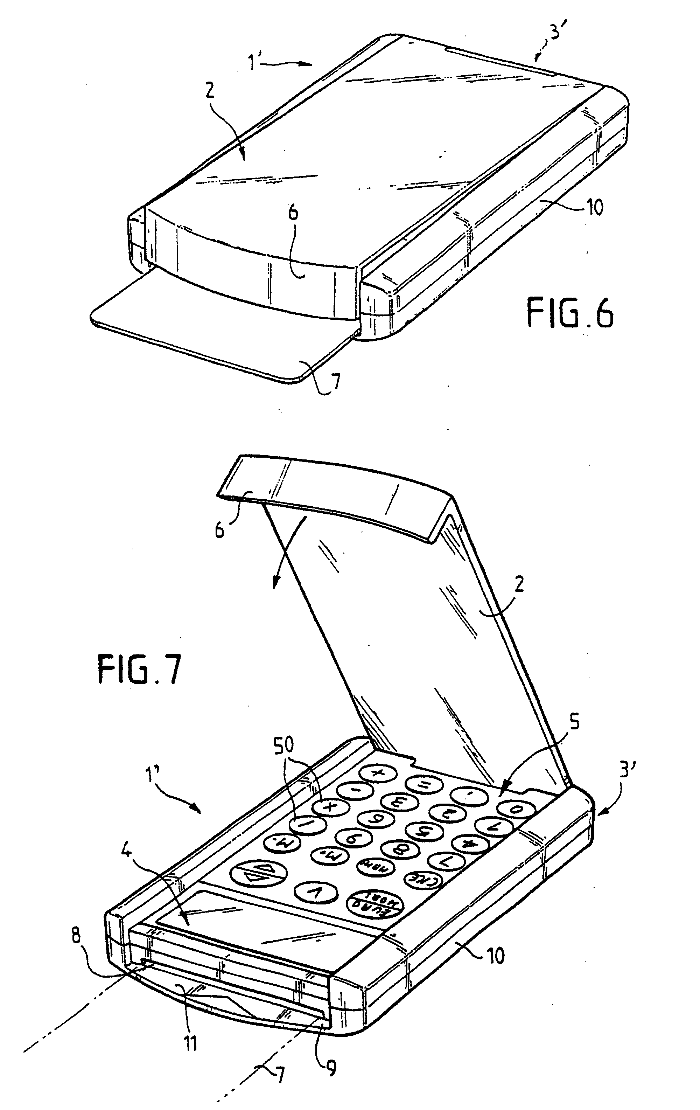

En premier lieu, dans un mode de réalisation préféré de l'invention, du fait des dispositions particulières adoptées pour le système de charnières, ou de l'organe articulé qui en fait fonction dans les modes de réalisation supplémentaires, le capot de protection 2 peut se rabattre entièrement sous le boîtier 10. Il s'ensuit, comme on l'aperçoit sur la figure 3, mais aussi encore plus clairement sur la figure 5 (vue de côté), puisque le rabat 6 est solidaire du capot 2, il accompagne sa course lorsque l'on ouvre complètement ce dernier. Il se retrouve également sous le boîtier 10 et, de ce fait, double l'épaisseur du boîtier 10 du lecteur de carte 1 au niveau de la fente de lecture 8. Si l'on pose le lecteur de carte 1 sur un plan (bureau *B* du praticien par exemple), il sert de piétement au niveau de la fente 8. Le boîtier 10 du lecteur de carte 1 repose de façon inclinée (angle α de l'ordre de 15 à 20 degrés avec le plan du bureau B), ce qui facilite l'insertion de la carte 7 dans la fente 8 (à l'arrière dans l'exemple décrit) et l'accès au clavier 5 (par exemple pour que le patient saisisse son code confidentiel). Il obtient également une meilleure perception de l'affichage des données (incidence améliorée).

En second lieu, lorsque la carte 7 est présente dans la fente 8, il devient impossible de refermer le capot 2. En effet, dans un mode de réalisation préféré, la profondeur de la fente d'insertion 8 est inférieure à la longueur maximale de la carte à puce 7. Il s'ensuit que la carte 7 dépasse du boîtier 10, même si elle est introduite normalement dans la fente de lecture 8, ce qui n'empêche pas les opérations normales de lecture et/ou écriture. Pour fixer les idées, la longueur de dépassement est d'environ 2 cm. En présence de la carte à puce 7, l'utilisateur du lecteur de carte 1 ne peut refermer le lecteur de carte 1, car le capot appuie sur la carte 7. Elle doit donc obligatoirement être retirée, pour être rendue à son propriétaire.

Dans les variantes qui viennent d'être décrites, la double charnière 3, ou l'organe qui en fait fonction, sont disposés sur le côté droit ou gauche du boîtier 10. Cette disposition laisse subsister un inconvénient, illustré schématiquement par la figure 8. En effet, lorsqu'on referme le capot 2, et si la carte 7 reste insérée dans la fente 8, le capot 2 exerce une force de cisaillement sur l'arête 71 de celle-ci, car il agit à la manière d'un couperet.

Aussi, dans une variante supplémentaire, illustrée par les figures 6 et 7, au lieu de disposer l'articulation à double charnière sur le grand côté du boîtier du lecteur de carte, celle-ci est située sur ce qui a été appelé "devant" du boîtier 10, c'est-à-dire sur un des petits côtés.

Sur ces figures 6 et 7, le lecteur de carte a été référencé 1' et l'articulation à double charnière 3'. Les éléments communs aux figures précédentes portent les mêmes références et ne seront redécrits qu'en tant que de besoin.

Cette disposition est avantageuse car, si l'articulation à double charnière 3' est située sur l'avant du boîtier 10, lorsqu'on veut fermer le rabat 6, malgré la présence de la carte 7 (comme le montre plus particulièrement la figure 6) dans la fente de lecture 8, le rabat 6 butte contre toute la largeur de la carte 7. Il s'ensuit qu'il ne peut la casser, même en forçant

Enfin, on peut munir avantageusement le boîtier 10 d'un interrupteur ou d'un organe similaire 9, actionné par le rabat 6. Cet interrupteur 9 est disposé sur la paroi munie de la fente 8 d'introduction de la carte 7 et coupe l'alimentation en énergie électrique des circuits électroniques présents dans le boîtier 10 (non représentés) lorsque le Naturellement cette disposition avantageuse est compatible avec le premier mode de réalisation décrit en regard des figures 1 à 6, même si l'interrupteur 9 n'a pas été explicitement représenté sur ces figures.

Enfin, pour certaines applications, il n'est pas nécessaire de rendre la carte 7 après usage à son propriétaire et celle-ci pourrait rester sans inconvénients dans la fente de lecture 8. Pour ce type d'application, il peut être, au contraire, avantageux de la conserver à l'intérieur de la fente de lecture 8. Pour ce faire, on prévoit une fente 8 suffisamment profonde pour "avaler" entièrement la carte 7. En d'autres termes, la longueur de la fente 8 doit au moins égale à la longueur maximale de la carte 7. Celle-ci reste donc à l'abri dans la fente de lecture 8. En effet, celle-ci est obturée par le rabat 6, lorsque le capot 2 est refermé, le boîtier 10 sert alors d'étui de protection.

A la lecture de ce qui précède, on constate aisément que l'invention atteint bien les buts qu'elle s'est fixés.

La présence du rabat interdit, lorsque le lecteur de carte est hors service et le capot refermé, toute introduction d'éléments indésirables, notamment des petits objets métalliques tels des trombones, ou encore de poussières et particules diverses, et de façon plus générale de tout élément dangereux pour son bon fonctionnement.

En outre, du fait de la fonction "piétement" que joue le rabat lorsque le couvercle est entièrement ouvert, il permet une meilleure ergonomie, car le boîtier est en position inclinée.

Enfin, selon une première variante, le rabat interdit de laisser la carte à l'intérieur du boîtier lorsqu'on referme le capot, ou, tout au contraire, selon une seconde variante, lorsque la fente de lecture est suffisamment profonde pour que la carte puisse être insérée entièrement à l'intérieur du boîtier, le rabat empêche l'intrusions d'éléments dangereux également pour la carte (notamment pour sa puce), et contribue, avec le boîtier, à former un étui de protection pour cette carte.
Il doit être clair cependant que l'invention n'est pas limitée aux seuls exemples de réalisations explicitement décrits, notamment en relation avec les figures 1 à 8.

Il doit être clair cependant que l'invention n'est pas limitée aux seuls exemples de réalisations explicitement décrits, notamment en relation avec les figures 1 à 8.

Les matériaux utilisables sont essentiellement liés à l'application spécifique envisagée et participent d'un simple choix technologique à la portée de l'Homme du Métier.

De même, les appellations relatives au boîtier : "dessous", "dessus", "avant", "côtés" ou "arrière", sont purement arbitraires. Enfin, la fente d'introduction de la carte peut être, non pas placée sur l'arrière comme il a été décrit, mais sur n'importe quelle paroi latérale. Il suffit que le rabat soit positionné par rapport au capot de façon à obstruer cette fente lorsque le capot est fermé.

L'invention n'est pas non plus limitée à des applications mettant en oeuvre des cartes à puces. Tout au contraire, la carte peut être d'un type quelconque : carte magnétique, carte mixte (puce et pistes magnétiques), carte à effet piézo-électrique, etc.

En outre, le lecteur de carte peut se voir attribuer des fonctions supplémentaires : calculatrice, calendrier électronique, etc., accessibles grâce aux touches du clavier et à l'affichage.

## Revendications

1. Dispositif lecteur de carte (1), notamment de carte à puce (7), comprenant un boîtier (10) défini par plusieurs parois,
- une première paroi étant munie de moyens de saisie (5) et d'affichage (4) de données ;
- une deuxième paroi ayant une fente d'introduction (8) de ladite carte (7) à l'intérieur du boîtier (10);
- un capot (2) d'une seule pièce étant fixé au boîtier et étant disposé de façon qu'il puisse être positionné entre une position fermée et une position ouverte, le capot protégeant les moyens de saisie (5) et d'affichage (4) de données dans la position fermée ; et
- un rabat (6) solidaire dudit capot (2) et agencé de façon que, lorsque le capot (2) est dans ladite position fermée, le rabat recouvre ladite fente d'introduction (8), et lorsque le capot (2) est dans ladite position ouverte en étant replié sous ledit boîtier (10), ledit rabat (6) sert de piètement lorsque le boîtier (10) est posé sur une surface d'appui (*B*), de manière à ce que le boîtier (10) soit présenté de façon inclinée (α) à un utilisateur, par rapport à ladite surface d'appui (*B*).

2. Dispositif selon la revendication 1, **caractérisé en ce que** ledit rabat (6) et ledit capot (2) sont substantiellement plans, et **en ce que** les plans formés par le rabat (6) et le capot (2) sont substantiellement perpendiculaires entre eux.

3. Dispositif selon la revendication 1, **caractérisé en ce que** ledit capot (2) est couplé mécaniquement audit boîtier (10) par un organe articulé (3) lui permettant de recouvrir le boîtier (10), dans ladite position fermée, et d'être replié sous le boîtier (10), dans ladite position ouverte, de manière à ce que ledit rabat (6) forme ledit piètement.

4. Dispositif selon la revendication 3, **caractérisé en ce que** ledit organe articulé (3) est une double charnière constituée d'un élément parallélépipèdique rectangle (32), de largeur déterminée, muni, sur une première arête, d'une première charnière (30) et, sur une seconde arête, parallèle à la première, d'une seconde charnière (31), et **en ce que** la première charnière (30) couple mécaniquement le capot (2) audit élément parallélépipèdique rectangle (32), et la seconde charnière (31) couple celui-ci audit boîtier (10).

5. Dispositif selon la revendication 4, **caractérisé en ce que** ledit boîtier (2) étant de forme également sensiblement parallélépipèdique rectangle, ledit élément parallélépipèdique rectangle (32) est une bande de matériau rigide dont la largeur est égale à la moitié de la largeur de la paroi constituant ce côté, et **en ce que** ladite première. charnière (30) est fixée le long de cette paroi en son milieu, de manière à pouvoir replier ledit capot (2) sous le boîtier (10), lorsqu'il est dans ladite position ouverte et à ce que ledit rabat (6) serve de piétement sur une surface d'appui (*B*).

6. Dispositif selon la revendication 1, **caractérisé en ce que** ladite fente d'introduction (8) a une profondeur inférieure à la longueur maximale de ladite carte (7), de manière à ce que ledit rabat (6) soit bloqué et ledit capot (2) ne puisse être positionné dans ladite position fermée, tant que la carte (7) reste à l'intérieur de la fente d'introduction (8).

7. Dispositif selon la revendication 1, **caractérisé en ce que** ladite fente d'introduction (8) a une profondeur au moins égale à la longueur maximale de ladite carte (7), de manière à ce que sa présence dans la fente d'introduction n'empêche pas la fermeture dudit capot (2) et à ce que ledit boîtier (10) puisse servir d'étui de protection pour cette carte (7), lorsque le boîtier (10) et ledit rabat (6) sont dans ladite position fermée.

8. Dispositif selon l'une quelconque des revendications précédentes, **caractérisé en ce que** ledit boîtier (10) est prolongé, sur la paroi munie de ladite fente d'introduction (8) par un plateau de guidage de ladite carte (7), lors de son insertion dans la fente d'introduction (8).

9. Dispositif selon l'une quelconque des revendications précédentes, **caractérisé en ce que** le boîtier (10) comporte un interrupteur (9) sur la paroi munie de ladite fente d'introduction (8), et **en ce que** cet interrupteur (9) est actionné par ledit rabat (6), pour couper ou rétablir l'alimentation en énergie électrique de circuits électroniques présents dans le boîtier (10).

## Patentansprüche

1. Vorrichtung (1) zum Lesen von Karten, insbesondere Karten mit elektronischem Chip (7), bestehend aus einem durch mehrere Wände gebildeten Gehäuse (10), wobei
- eine erste Wand mit Vorrichtungen zur Dateneingabe (5) und Anzeige (4) bestückt ist ;
- eine zweite Wand einen Einführungsschlitz (8) zum Einschieben besagter Karte (7) ins Innere des Gehäuses (10) besitzt;
- eine aus einem Stück gefertigte Abdeckung (2) so am Gehäuse befestigt ist, dass sie eine beliebige Lage zwischen geschlossener und geöffneter Stellung einnehmen kann und in geschlossener Stellung die Vorrichtungen zur Dateneingabe (5) und Anzeige (4) schützt; und
- eine mit besagter Abdeckung (2) verbundene Klappe (6) so angeordnet ist, dass sie besagten Einführungsschlitz (8) verdeckt, wenn sich die Abdeckung (2) in besagter geschlossener Stellung befindet, und dass, wenn sich die Abdeckung (2) in besagter geöffneter Stellung befindet und unter das Gehäuse (10) geklappt ist, besagte Klappe (6) als Fuss dient wenn das Gehäuse (10) auf einer Auflagefläche (*B*) aufliegt, wodurch das Gehäuse (10) sich einem Benutzer in einer gegenüber der Auflagefläche (*B*) geneigten Lage darbietet.

2. Vorrichtung nach Anspruch 1, **dadurch gekennzeichnet, dass** besagte Klappe (6) und besagte Abdeckung (2) hauptsächlich eben sind, und dass die durch die Klappe (6) und die Abdeckung (2) gebildeten Ebenen hauptsächlich rechtwinklig zueinander sind.

3. Vorrichtung nach Anspruch 1, **dadurch gekennzeichnet, dass** besagte Abdeckung (2) durch ein gelenkiges Organ (3) mechanisch an besagtes Gehäuse (10) gekoppelt ist und dadurch das Gehäuse (10) in besagter geschlossener Stellung verdeckt, und in besagter offener Stellung unter das Gehäuse (10) geschoben wird, so dass besagte Klappe (6) den besagten Fuss bildet.

4. Vorrichtung nach Anspruch 3, **dadurch gekennzeichnet, dass** besagtes gelenkiges Organ (3) ein doppeltes Scharnier ist, bestehend aus einem rechteckigen Körper (32) bestimmter Breite, an dessen erster Kante ein erstes Schamier (30) und an dessen zweiter, zur ersten Kante parallelen Kante ein zweites Scharnier (31) angebracht ist, und dass das erste Schamier (30) die Abdeckung (2) mechanisch an besagten rechteckigen Körper (32), und das zweite Schamier (31) letzteren an das Gehäuse (10) koppelt.

5. Vorrichtung nach Anspruch 4, **dadurch gekennzeichnet, dass** besagtes Gehäuse (2) gleichfalls eine deutlich rechteckige Form besitzt, und besagter rechteckiger Körper (32) aus einem Streifen aus steifem Material besteht, dessen Breite gleich der Hälfte der Breite der diese Seite bildenden Wand ist, und dass besagtes erstes Schamier (30) längsseitig in der Mitte dieser Wand angebracht ist, so dass besagte Abdeckung (2) unter das Gehäuse (10) geschoben werden kann, wenn sie sich in besagter geöffeneter Stellung befindet, und dass besagte Klappe (6) auf einer Auflagefläche (*B*) als Fuss dient.

6. Vorrichtung nach Anspruch 1, **dadurch gekennzeichnet, dass** besagter Einführungsschlitz (8) eine geringere Tiefe als die maximale Länge besagter Karte (7) aufweist, so dass besagte Klappe (6) blockiert ist und besagte Abdeckung (2) nicht in besagte geschlossene Stellung gebracht werden kann, solange sich die Karte (7) im Innem des Einführungsschlitzes (8) befindet.

7. Vorrichtung nach Anspruch 1, **dadurch gekennzeichnet, dass** besagter Einführungsschlitz (8) eine Tiefe mindestens gleich der maximalen Länge besagter Karte (7) besitzt, so dass ihre Präsenz im Einführungsschlitz das Schliessen besagter Abdeckung (2) nicht verhindert und dass besagtes Gehäuse (10) als Schutzhülle für diese Karte (7) dienen kann, wenn sich das Gehäuse (10) und besagte Klappe (6) in besagter geschlossener Stellung befinden.

8. Vorrichtung nach einem der obigen Ansprüche, **dadurch gekennzeichnet, dass** besagtes Gehäuse (10) auf der mit besagtem Einführungsschlitz (8) versehenen Wand durch eine Platte verlängert wird, die als Führung beim Einführen besagter Karte (7) in den Einführungsschlitz (8) dient.

9. Vorrichtung nach einem der obigen Ansprüche, **dadurch gekennzeichnet, dass** das Gehäuse (10) auf der mit besagtem Einführungsschlitz (8), versehenen Wand einen Schalter (9) besitzt, und dass besagter Schalter (9) durch besagte Klappe (6) betätigt wird, um die Stromversorgung der im Gehäuse (10) enthaltenen elektronischen Schaltungen herzustellen bzw. zu unterbrechen.

## Claims

1. Card reader device (1), especially smart cards (7), comprising a box (10) defined by several walls,
- a first wall being equipped with data entry (5) and display (4) means;
- a second wall having an insertion slot (8) to insert said card (7) inside the box (10);
- a one-piece cover (2) being fastened to the box and being designed so that it can be positioned between a dosed position and an open position, the cover protecting the data entry (5) and display (4) means in the closed position; and
- a flap (6) attached to said cover (2) and designed so that, when the cover (2) is in said closed position, the flap covers said insertion slot (8), and when the cover (2) is in said open position by being folded back under said box (10), said flap (6) forms a stand when the box (10) is placed on a supporting surface (*B*), so that the box (10) is presented at an angle to a user, with respect to said supporting surface (*B*).

2. Device according to claim 1, **characterised in that** said flap (6) and said cover (2) are essentially plane, and **in that** the planes formed by the flap (6) and the cover (2) are essentially perpendicular to each other.

3. Device according to claim 1, **characterised in that** said cover (2) is mechanically coupled to said box (10) by an articulated unit (3) so that it can cover the box (10), in said closed position and be folded under the box (10), in said open position, such that said flap (6) forms said stand.

4. Device according to claim 3, charcaterised in that said articulated unit (3) is a double hinge formed from a right parallelepipedic element (32), of given width, equipped, on a first adge, with a first hinge (30) and, on a second edge, parallel to the first, with a second hinge (31), and in that the first hinge (30) mechanically couples the cover (2) to said right parallelepipedic elemnt (32), and the second hinge (31) couples it to said box (10).

5. Device according to claim 4, **characterised in that** said box (2) also being essentially a right parallelepiped, said right parallelepipedic element (32) is a strip of rigid material of a width equal to one half of the width of the wall forming this side, and **in that** said first hinge (30) is attached along this wall in its middle, so that said cover (2) can be folded back under the box (10), when it is in said open position and so that said flap (6) can act as a stand on a supporting surface (B).

6. Device according to claim 1, **characterised in that** the depth of said insertion slot (8) is less than the maximum length of said card (7), so that said flap (6) is blocked and said cover (2) cannot be positionned in said closed position while the card (7) remains inside the insertion slot (8).

7. Device according to claim 1, **characterised in that** the depth of said insertion slot (8) is at least equal to the maximum length of said card (7), so that its presence in the insertion slot does not stop said cover (2) from closing and so that said box (10) can act as protective case for this card (7) when the box (10) and said flap (6) are in said closed position.

8. Device according to any of the previous claims, **characterised in that** said box (10) is extended, on the wall equipped with said insertion slot (8) by a guide for said card (7), during its insertion in the insertion slot (8).

9. Device according to any of the previous claims, **characterised in that** the box (10) comprises a switch (9) on the wall equipped with said insertion slot (8), and **in that** this switch (9) is operated by said flap (6), to switch off or on the electricity for the electronic circuits in the box (10).
